# EUROPEAN PATENT SPECIFICATION

(11) **EP 1 652 747 B1**
(45) Date of publication and mention of the grant of the patent: **31.12.2008**
(21) Application number: 04025723.0
(22) Date of filing: 29.10.2004
(51) Int. Cl.: B62B 7/08

(54) **Foldable frame with a locking device**
Zusammenklappbarer Rahmen mit Verriegelungsvorrichtung
Châssis pliable avec dispositif de verrouillage

(43) Date of publication of application: 03.05.2006
(73) Proprietor: Wonderland Nurserygoods Co., Ltd., Taipei (TW)
(72) Inventor: Chen, Shun-Min, Rui-Kwang Road Neihu Tapei (TW)
(74) Representative: Rössler, Matthias

(56) References cited:
- GB-A- 2 273 270
- GB-A- 2 334 489
- US-A- 2 467 579
- US-A- 4 765 645
- US-A1- 2003 021 626
- US-A1- 2003 075 902
- US-B1- 6 422 586

## Description

The invention relates to a foldable frame, more particularly to a foldable frame with a locking device that can prevent inadvertent folding of the frame and that can be easily and safely operated so as to facilitate folding and unfolding of the frame.

US 4 765 645 discloses a foldable frame with a locking device according to the preamble of claims 1 and 13.

A plurality of locking units have been developed to facilitate folding and unfolding of a frame body, such as that used for a table, a chair, an infant stroller, etc.

In each of U.S. Patent Nos. 4765645, 5226658, 5845925, and 6422586, there is disclosed a locking unit for a stroller. Each of the different constructions of the aforementioned locking units is complicated, unreliable, and even unsafe to use. Thus, there is a need to provide a foldable frame with a locking device which has a more simple and reliable structure. US 2003/0075902 discloses a foldable stroller with a cable for pulling a sleeve away from a juncture of a first and a second bar of a foldable frame.

Therefore, the object of the present invention is to provide a foldable frame with a locking device that is convenient and safe to use, and effective in operation.

Another object of the present invention is to provide a foldable frame with a locking device that can prevent inadvertent folding of the frame.

A further object of the present invention is to provide a stroller which is safe and convenient to use.

According to one aspect of this invention, there is provided a foldable frame as defined in claim 1.

According to another aspect of this invention, there is provided a locking device according to claim 13.

Other features and advantages of the present invention will become apparent in the following detailed description of the preferred embodiment with reference to the accompanying drawings, of which:
Figure 1 is a perspective view of the preferred embodiment of a foldable frame according to the present invention;
Figure 2 is an exploded perspective view of a locking device of the preferred embodiment;
Figure 3 is a fragmentary perspective view of the locking device in an assembled state;
Figure 4 is an exploded perspective view of a control unit of the locking device;
Figure 5 is a fragmentary schematic view of the frame in a folded state;
Figure 6 is a view similar to Figure 5, but illustrating the frame in a fully unfolded state;
Figure 7 is a view similar to that of Figure 5, but illustrating the frame in an initially expanded state; and
Figure 8 is a view similar to Figure 5, but illustrating a sleeve of the locking device in a state pulled away from a juncture of first and second bars.

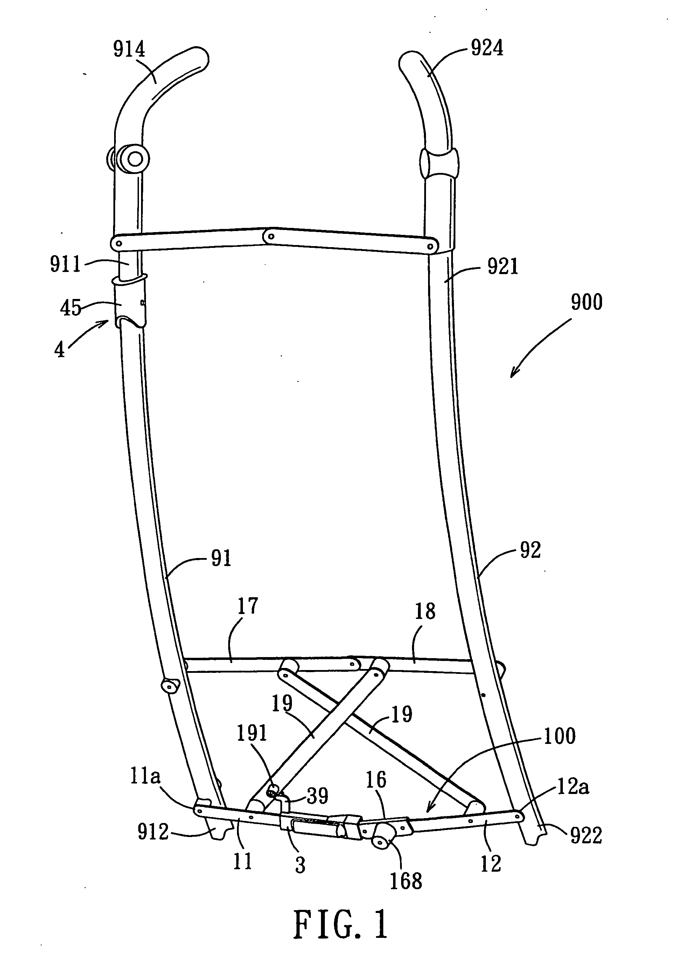

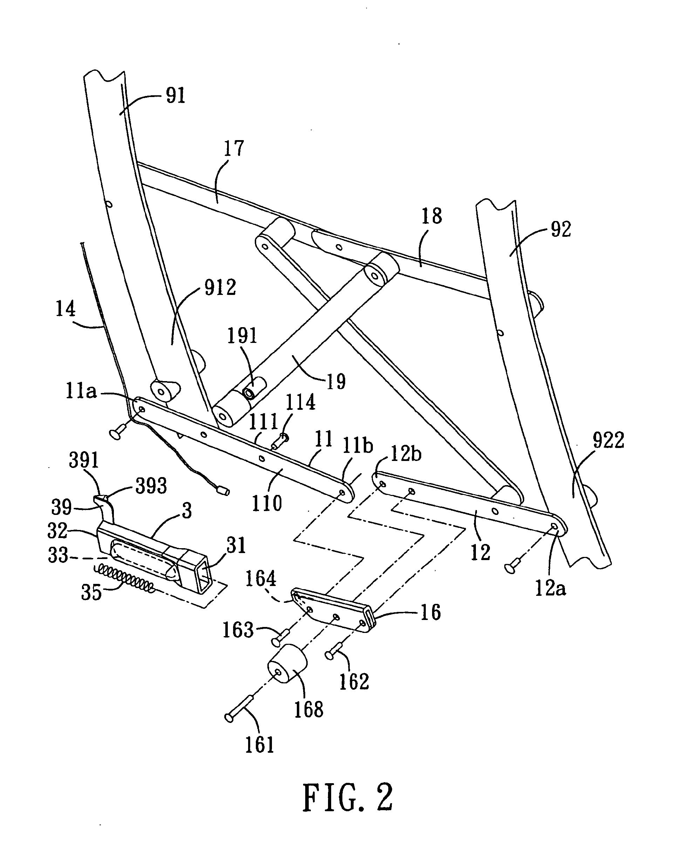

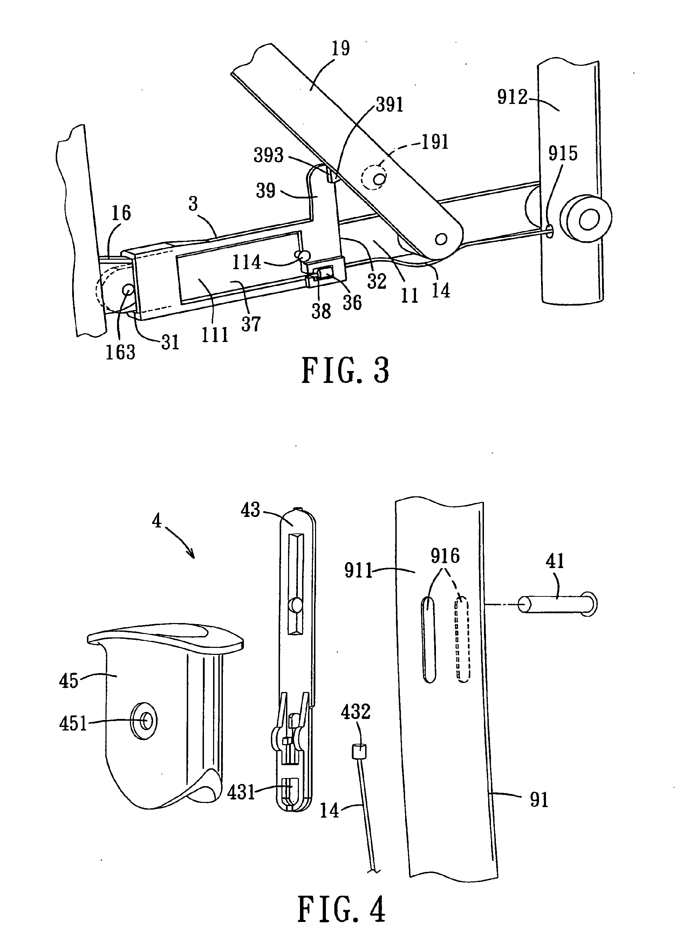

Referring to Figures 1 to 4, a foldable frame 900 is shown to comprise first and second support rods 91, 92, and a pair of intersecting links 19, and incorporates a locking device 100 embodying the present invention. The foldable frame 900 exemplified in this embodiment is a foldable frame used in an infant stroller. However, the locking device of the present invention may also be used in a foldable frame for a table, a chair, a bed assembly, etc.

The first and second support rods 91, 92 in this embodiment are spaced apart from and are parallel to each other. Each of the first and second support rods 91, 92 has an upper end portion 911, 921 and a lower end portion 912, 922. The upper end portion 911, 921 of each of the first and second support rods 91, 92 is provided with a handle 914, 924, whereas the lower end portion 912, 922 of each of the first and second support rods 91, 92 is connected to a wheel assembly (not shown) of the stroller. When the foldable frame 900 is unfolded, the first and second support rods 91, 92 move away from each other. When the foldable frame 900 is folded, the first and second support rods 91, 92 approach each other.

The locking device 100 includes an elongated first bar 11, an elongated second bar 12, a sleeve 3, and a control unit 4. The first bar 11 has a first end 11a connected pivotally to the lower end portion 912 of the first support rod 91, and a second end 11b opposite to the first end 11a. The second bar 12 has a first end 12a connected pivotally to the lower end portion 922 of the second support rod 92, and a second end 12b connected pivotally to the second end 11b of the first bar 11. The first and second bars 11, 12 are movable relative to each other so as to be folded or unfolded.

The second bar 12 further includes a limiting member 16 disposed on the second end 12b of the second bar 12. In this embodiment, the first and second bars 11, 12 are connected pivotally to each other through the limiting member 16. The limiting member 16 has a substantially U-shaped cross-section, and is sleeved on the second bar 12 in an inverted manner so that an inner wall face 164 of the limiting member 16 projects from the second end 12b of the second bar 12 to overlap the second end 11b of the first bar 11. The limiting member 16 has one end fixed immovably to the second bar 12 by a first pin 162, and the other end connected pivotally to the second end 11b of the first bar 11 by a second pin 163. A cylindrical pedal block 168 projects outwardly from the limiting member 16 and transversely of the second bar 12, and is fixed to the limiting member 16 by a third pin 161.

When the first and second bars 11, 12 are unfolded, the inner wall face 164 of the limiting member 16 engages the second end 11b of the first bar 11, thereby limiting relative movement between the first and second bars 11, 12.

It is noted that the limiting member 16 may be formed integrally with the second bar 12 because the limiting member 16 is not required to pivot relative to the second bar 12, in which case, the pedal block 168 may be fixed to the second bar 12 instead of the limiting member 16.

The sleeve 3 is formed as a tubular member with a rectangular cross-section, and has two opposite first and second open ends 31, 32. The sleeve 3 is disposed slidably around the first bar 11, and is movable for partial placement over a juncture of the first and second bars 11, 12 when the bars 11, 12 are unfolded so as to limit relative movement between the first and second bars 11, 12. The first open end 31 is proximate to the juncture of the first and second bars 11, 12. The sleeve 3 further includes a receiving groove 33, a biasing unit 35, and a rectangular slot 37. The receiving groove 33 faces a front surface 110 of the first bar 11, and is defined by an elongated wall projecting outwardly from a front wall of the sleeve 3 so that the front wall of the sleeve 3 is formed with an elongated protrusion.

The biasing unit 35 is disposed in the receiving groove 33, and normally biases the sleeve 3 to move toward the juncture of the first and second bars 11, 12 in the absence of an external force. In this embodiment, the biasing unit 35 is a helical spring, and has one end abutting against the wall defining the receiving groove 33, and another end connected to the first bar 11 through a fourth pin 114.

The rectangular slot 37 is formed in a rear wall of the sleeve 3 opposite to the receiving groove 33, and faces a rear surface 111 of the first bar 11. The fourth pin 114 has one end extending through the first bar 11, and the other end projecting outwardly from the slot 37. Due to the slot 37 provided in the sleeve 3, the sleeve 3 is able to freely slide along the first bar 11 without being hindered by the fourth pin 114.

The sleeve 3 further includes a first socket 38 which is provided adjacent to the second open end 32 of the sleeve 3 and distal from the second bar 12, and a first lump 36 received in the first socket 38.

The control unit 4 includes a cable 14, and a hand-operated mechanism. One end of the cable 14 is connected to the first lump 36 for pulling the sleeve 3 away from the juncture of the first and second bars 11, 12 so that the first and second bars 11, 12 can be folded. The hand-operated mechanism is mounted on the upper end portion 911 of the first support rod 91, and includes a slide plate 43, and a knob 45. The slide plate 43 is inserted into the first support rod 91, and has a second socket 431, and a second lump 432 received in the second socket 431. The cable 14 extends into the lower end portion 912 of the first support rod 91 via a through hole 915, and then extends to the upper end portion 911 of the first support rod 91 to connect with the second lump 432.

The knob 45 has a hollow cylindrical shape, and is sleeved slidably around the first support rod 91. The first support rod 91 further has a pair of aligned elongated guide slots 916 that extend substantially parallel to an axis of the first support rod 91. The slide plate 43 is connected to the knob 45 through a fifth pin 41 that passes through a hole 451 at one side of the knob 45, one of the guide slots 916, the slide plate 43, and extends out of the other one of the guide slots 916. The end of the pin 41 is fitted into the other hole 451 in the other side of the knob 45 so that the knob 45 can move along the guide slots 916. When the knob 45 is moved, the slide plate 43 and the cable 14 move in unison with the knob 45.

A third bar 17 and a fourth bar 18 are provided above the first and second bars 11, 12 in this embodiment. Each of the third and fourth bars 17, 18 has one end connected pivotally to each other, and another end connected pivotally to a respective one of the first and second support rods 91, 92.

The intersecting links 19 are pivoted to each other between the first and second support rods 91, 92. Each of the intersecting links 19 has one end connected pivotally to one of the first and second bars 11, 12, and another end connected pivotally to one of the third and fourth bars 17, 18.

A retention unit is provided for limiting the sleeve 3 from moving toward the juncture of the first and second bars 11, 12 after the sleeve 3 is pulled away from the juncture against biasing action of the biasing unit 35. The retention unit includes an engaging member 39 which projects upwardly and integrally from the sleeve 3, and a retaining piece 191 which protrudes outwardly from one of the intersecting links 19. The engaging member 39 has a guide face 391, and an engaging face 393 engageable with the retaining piece 191. In this embodiment, the retaining piece 191 is a plastic piece, and is fixed on said one of the intersecting links 19 by a pin (not shown).

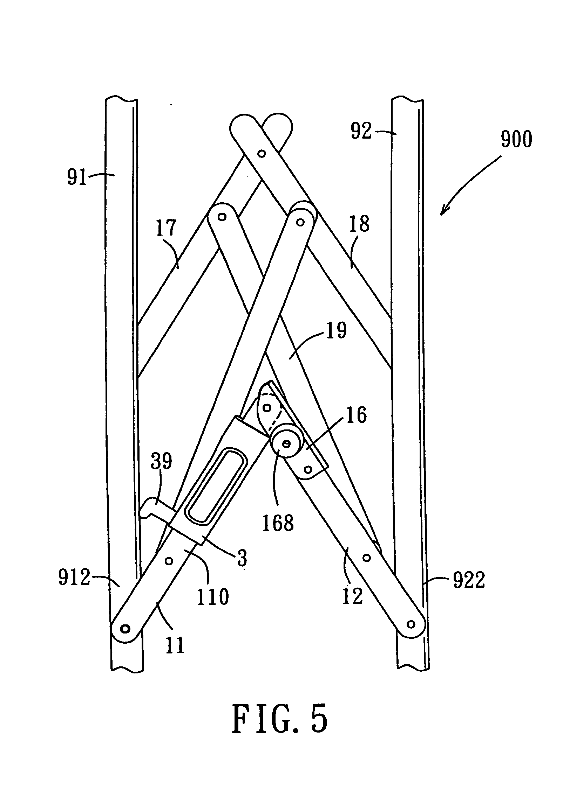

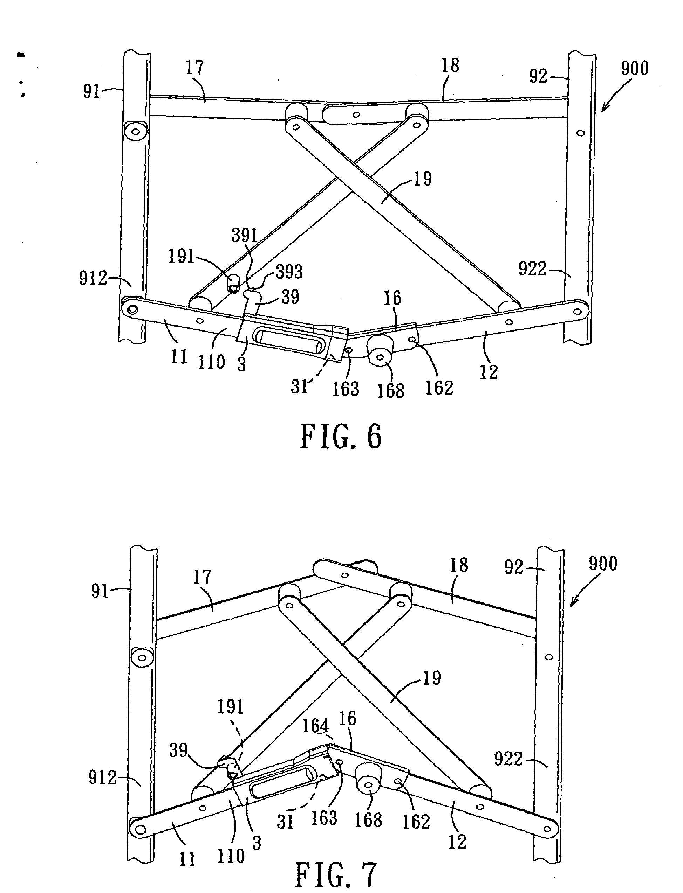

Referring to Figure 5, when the stroller is to be used, that is, when the foldable frame 900 is to be converted from a folded state shown in Figure 5 to an unfolded state shown in Figure 6, the frame 900 is first placed in an initial expanded position shown in Figure 7. This is accomplished, for example, by the user applying a force on the handles 914, 924. Next, the user steps on the pedal block 168 of the limiting member 16 so as to move the first and second bars 11, 12 downwardly. The first and second bars 11, 12 are moved continuously until the second end 11b of the first bar 11 engages the inner wall face 164 of the limiting member 16. The first and second bars 11, 12 are therefore prevented from pivoting further at this time.

When the first and second bars 11, 12 are stopped from pivoting, the first open end 31 of the sleeve 3 is biased by the biasing unit 35 to move to the juncture of the first and second bars 11, 12 so that the first and second bars 11, 12 are further restricted from pivoting relative to each other. In this state, if the pedal block 168 is accidentally kicked, or otherwise struck by the user or an object, the frame 900 remains unfolded, thereby preventing inadvertent folding of the frame 900.

During unfolding of the frame 900, the first and second bars 11, 12 are pulled apart to be converted from an inverted-V shape shown in Figure 5 to a shape with a slight oblique angle formed therebetween as shown in Figure 6.

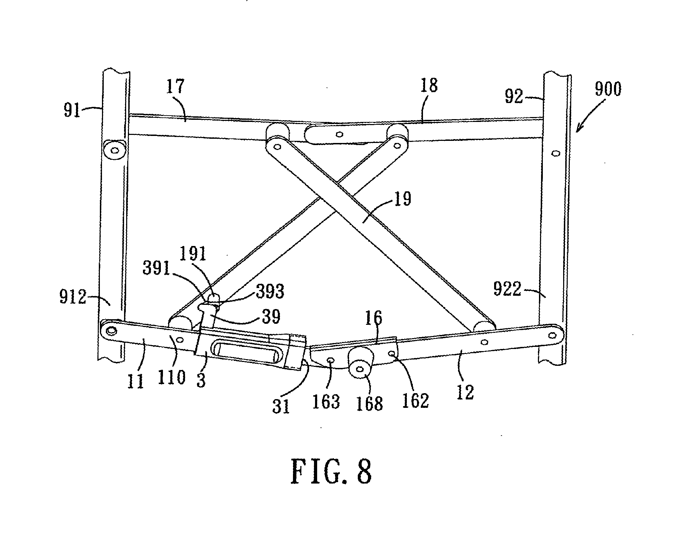

When it is desired to store the stroller, the foldable frame 900 is converted from the unfolded state shown in Figure 6 to the folded state shown in Figure 5. To perform this operation, the user simply slides the knob 45 upwardly along the first support rod 91 so that the cable 14 pulls the sleeve 3 away from the juncture of the first and second bars 11, 12 against the biasing action of the biasing unit 35. At this time, the biasing unit 35 is compressed, and the guide face 391 of the engaging member 39 slides past the retaining piece 191 so that the engaging face 393 of the engaging member 39 can engage the retaining piece 191 (see Figure 8), thereby preventing the sleeve 3 from moving back toward the juncture of the first and second bars 11, 12.

After the engaging face 393 of the engaging member 39 engages the retaining piece 191, the user releases his/her hold on the knob 45, and then uses his/her foot to force upwardly the pedal block 168 so that the second end 11b of the first bar 11 is disengaged from the inner wall face 164 of the limiting member 16. The user then applies a force to the handles 914, 924 in a direction toward each other such that the first and second bars 11, 12, the third and fourth bars 17, 18, and the intersecting links 19 pivot relative to each other for folding, thereby bringing the foldable frame 900 to the folded state (see Figure 5) and bringing the first and second support rods 91, 92 proximate to each other.

It should be noted that during folding of the foldable frame 900, the locations of the engaging face 393 and the retaining piece 191 are changed so that the engaging face 393 can disengage from the retaining piece 191. As a result, the sleeve 3 is biased by the biasing unit 35 to move toward and contact the limiting member 16.

## Claims

1. A foldable frame (900) comprising:
first and second support rods (91, 92) which are spaced apart from each other;
a first bar (11) having a first end (11a) connected pivotally to said first support rod (91) and a second end (11b) opposite to said first end (11a);
a second bar (12) having a first end (12a) connected pivotally to said second support rod (92) and a second end (12b) connected pivotally to said second end (11b) of said first bar (11), said first and second bars (11, 12) being connected pivotally to each other so as to be folded or unfolded;
**characterized by**
a sleeve (3) formed as a tubular member which is disposed slidably around said first bar (11) and movable to a juncture of said first and second bars (11, 12) when said first and second bars (11, 12) are unfolded, said tubular member being sleeved around a portion of said second bar (12) when moved to said juncture so as to limit said second bar (12) from moving relative to said first bar (11); and
a control unit (4) having a cable (14)connected to said sleeve (3) for pulling said sleeve (3) away from said juncture of said first and second bars (11, 12) so that said first and second bars (11, 12) can be folded.

2. The foldable frame (900) as claimed in Claim 1, **characterized in that** said second bar (12) further includes a limiting member (16) which is disposed on said second end (12b) of said second bar (12) and which is engageable with said second end (11b) of said first bar (11) to limit relative movement between said first and second bars (11, 12) when said first and second bars (11, 12) are unfolded.

3. The foldable frame (900) as claimed in Claim 2, **characterized in that** said limiting member (16) has a substantially U-shaped cross-section and projects from said second end (12b) of said second bar (12) to overlap said second end (11b) of said first bar (11), said limiting member (16) having an inner wall face (164) engageable with said second end (11b) of said first bar (11).

4. The foldable frame (900) as claimed in Claim 2, **characterized in that** said limiting member (16) has a pedal block (168) projecting outwardly from said limiting member (16) and transversely of said second bar (12).

5. The foldable frame (900) as claimed in Claim 1, **characterized in that** said sleeve (3) includes a biasing unit (35) which biases said sleeve (3) to move toward said juncture of said first and second bars (11, 12).

6. The foldable frame (900) as claimed in Claim 5, further **characterized by** a retention unit for limiting said sleeve (3) from moving toward said juncture of said first and second bars (11, 12) after said sleeve (3) is pulled away from said juncture against biasing action of said biasing unit (35).

7. The foldable frame (900) as claimed in Claim 6, further **characterized by** a pair of intersecting links (19) which are pivoted to each other between said first and second support rods (91, 92), each of said intersecting links (19) having one end connected pivotally to one of said first and second bars (11, 12), said retention unit including an engaging member (39) which projects from said sleeve (3), and a retaining piece (191) which projects from one of said links (19), said engaging member (39) being engageable with said retaining piece (191).

8. The foldable frame (900) as claimed in Claim 5, **characterized in that** said sleeve (3) has a receiving groove (33) for receiving said biasing unit (35), said biasing unit (35) having one end connected to said sleeve (3) and another end connected to said first bar (11).

9. The foldable frame (900) as claimed in Claim 1, wherein said sleeve (3) has a socket (38), and a lump (36) received in said socket (38) and connected to said cable (14).

10. The foldable frame (900) as claimed in Claim 1, **characterized in that** said control unit (4) includes a hand-operated mechanism mounted on one of said first and second support rods (91, 92) and connected to said cable (14).

11. The foldable frame (900) as claimed in Claim 10, **characterized in that** said hand-operated mechanism includes a knob (45) which is sleeved slidably around one of said first and second support rods (91, 92) and which is connected to said cable (14), said cable (14) being movable in unison with said knob (45).

12. The foldable frame (900) as claimed in Claim 11, **characterized in that** said hand-operated mechanism further includes a slide plate (43) inserted into said one of said first and second support rods (91, 92) and connected to said knob (45), said cable (14) being connected to said slide plate (43).

13. A locking device (100) adapted to be mounted on a foldable frame (900), the frame (900) having first and second support rods (91, 92), said locking device (100) comprising:
a first bar (11) having a first end (11a) adapted to be connected pivotally to the first support rod (91), and a second end (11b) opposite to said first end (11a);
a second bar (12) having a first end (12a) adapted to be connected pivotally to the second support rod (92), and a second end (12b) connected pivotally to said second end (11b) of said first bar (11), said first and second bars (11, 12) being movable relative to each other so as to be folded or unfolded;
**characterized by**
a sleeve (3) formed as a tubular member which is sleeved slidably on said first bar (11) and capable of extending toward a juncture of said first and second bars (11, 12) when said first and second bars (11, 12) are unfolded said tubular member being sleeved around a portion of said second bar (12) when moved to said juncture so as to limit relative movement between said first and second bars (11, 12); and
a control unit (4) having a manually operable cable (14) connected to said sleeve (3) for pulling said sleeve (3) away from said juncture of said first and second bars (11, 12) so that said first and second bars (11, 12) can be folded.

14. The locking device (100) as claimed in Claim 13, **characterized in that** said control unit (4) includes a hand-operated mechanism mounted on one of said first and second support rods (91, 92) and connected to said cable (14).

15. The locking device (100) as claimed in Claim 14, **characterized in that** said hand-operated mechanism includes a knob (45) which is sleeved slidably around one of said first and second support rods (91, 92) and which is connected to said cable (14), said cable (14) being movable in unison with said knob (45).

16. The locking device (100) as claimed in Claim 13,
**characterized in that** said sleeve (3) includes a biasing unit (35) which biases said sleeve (3) to move toward said juncture of said first and second bars (11, 12).

17. The locking device (100) as claimed in Claim 16, further **characterized by** a retention unit for limiting said sleeve (3) from moving toward said juncture of said first and second bars (11, 12) after said sleeve (3) is pulled away from said juncture against biasing action of said biasing unit (35).

## Patentansprüche

1. Ein zusammenklappbarer Rahmen (900), umfassend
erste und zweite Stützstangen (91, 92), die voneinander beabstandet sind;
einen ersten Steg (11), der ein erstes Ende (11a) aufweist, das schwenkbar mit der ersten Stützstange (91) verbunden ist und ein zweites Ende (11 b), das dem ersten Ende (11a) gegenüberliegt;
einen zweiten Steg (12), der ein erstes Ende (12a) hat, das schwenkbar mit der zweiten Stützstange (92) verbunden ist und ein zweites Ende (12b), das schwenkbar mit dem zweiten Ende (11b) des ersten Stegs (11) verbunden ist, wobei die ersten und zweiten Stege (11, 12) schwenkbar miteinander verbunden sind, um zusammengeklappt oder auseinandergeklappt zu werden; **gekennzeichnet durch**
eine Hülse (3), die als rohrförmiges Element ausgebildet ist, das gleitfähig um den ersten Steg (11) angeordnet ist und das bis zu einem Verbindungspunkt der ersten und zweiten Stege (11, 12) beweglich ist, wenn der erste und zweite Steg (11, 12) auseinandergeklappt wird, wobei das rohrförmige Element um einen Abschnitt des zweiten Stegs (12) gestülpt ist, wenn es zu dem Verbindungspunkt hinbewegt wird, um den zweiten Steg (12) darin einzuschränken, sich relativ zum ersten Steg (11) zu bewegen; und
eine Steuereinheit (4), die ein Kabel (14) aufweist, das mit der Hülse (3) verbunden ist, um die Hülse (3) von dem Verbindungspunkt der ersten und zweiten Stege (11, 12) wegzuziehen, so dass die ersten und zweiten Stege (11, 12) zusammengeklappt werden können.

2. Der zusammenklappbare Rahmen (900) nach Anspruch 1, **dadurch gekennzeichnet, dass** der zweite Steg (12) weiterhin ein Begrenzungselement (16) beinhaltet, das auf dem zweiten Ende (12b) des zweiten Stegs (12) angeordnet ist und das mit dem zweiten Ende (11b) des ersten Stegs (11) in Eingriff kommen kann, um eine Relativbewegung zwischen den ersten und zweiten Stegen (11, 12) zu begrenzen, wenn die ersten und zweiten Stege (11, 12) auseinandergeklappt sind.

3. Zusammenklappbarer Rahmen (900) nach Anspruch 2, **dadurch gekennzeichnet, dass** das Begrenzungselement (16) einen im Wesentlichen U-förmigen Querschnitt hat und sich von dem zweiten Ende (12b) des zweiten Stegs (12) aus vorstreckt, um das zweite Ende (11b) des ersten Stegs (11) zu überlappen, wobei das Begrenzungselement (16) eine Innenwandseite (164) aufweist, die mit dem zweiten Ende (11b) des ersten Stegs (11) in Eingriff kommen kann.

4. Zusammenklappbarer Rahmen (900) nach Anspruch 2, **dadurch gekennzeichnet, dass** das Begrenzungselement (16) eine Pedalarretierung (168) aufweist, die sich auswärts von dem Begrenzungselement (16) aus und quer zum zweiten Steg (12) vorstreckt.

5. Zusammenklappbarer Rahmen (900) nach Anspruch 1, **dadurch gekennzeichnet, dass** die Hülse (3) eine Vorspannungseinheit (35) beinhaltet, die die Hülse (3) so drängt, dass sie sich hin zu dem Verbindungspunkt der ersten und zweiten Stege (11, 12) bewegt.

6. Zusammenklappbarer Rahmen (900) nach Anspruch 5, weiterhin durch eine Rückhalteeinheit **gekennzeichnet**, die die Hülse (3) darin begrenzt, sich hin zu dem Verbindungspunkt der ersten und zweiten Stege (11, 12) zu bewegen, nachdem die Hülse (3) weg von dem Verbindungspunkt gegen die Vorspananaktion der Vorspannungseinheit (35) weggezogen wurde.

7. Zusammenklappbarer Rahmen (900) nach Anspruch 6, weiterhin **gekennzeichnet durch** ein Paar sich kreuzender Verbindungsglieder (19), die zwischen den ersten und zweiten Stützstangen (91, 92) schwenkbar zueinander angeordnet sind, wobei jedes von den sich kreuzenden Verbindungsgliedern (19) ein Ende aufweist, das schwenkbar mit einem der ersten und zweiten Stege (11, 12) verbunden ist, wobei die Rückhalteeinheit ein Eingriffselement (39) beinhaltet, das sich von der Hülse (3) aus vorstreckt und ein Halteteil (191), das sich von einem der Verbindungsglieder (19) aus vorstreckt, wobei das Eingriffselement (39) in Eingriff mit dem Halteteil (191) kommen kann.

8. Zusammenklappbarer Rahmen (900) nach Anspruch 5, **dadurch gekennzeichnet, dass** die Hülse (3) eine Aufnahmenut (33) zur Aufnahme der Vorspannungseinheit (35) hat, wobei die Vorspannungseinheit (35) ein Ende hat, das mit der Hülse (3) verbunden ist und ein weiteres Ende, das mit dem ersten Steg (11) verbunden ist.

9. Zusammenklappbarer Rahmen (900) nach Anspruch 1, wobei die Hülse (3) eine Fassung (38) sowie eine Geschwulst (36) aufweist, die in der Fassung (38) aufgenommen wird und mit dem Kabel (14) verbunden ist.

10. Zusammenklappbarer Rahmen (900) nach Anspruch 1, **dadurch gekennzeichnet, dass** die Steuereinheit (4) einen manuell bedienten Mechanismus beinhaltet, der auf eine der ersten und zweiten Stützstangen (91, 92) montiert und mit dem Kabel (14) verbunden ist.

11. Zusammenklappbarer Rahmen (900) nach Anspruch 10, **dadurch gekennzeichnet, dass** der manuell bediente Mechanismus einen Knopf (45) beinhaltet, der gleitfähig um eine der ersten und zweiten Stützstangen (91, 92) gestülpt ist und an dem Kabel (14) angeschlossen ist, wobei das Kabel (14) übereinstimmend mit dem Knopf (45) beweglich ist.

12. Zusammenklappbarer Rahmen (900) nach Anspruch 11, **dadurch gekennzeichnet, dass** der manuell bediente Mechanismus weiterhin eine Gleitplatte (43) beinhaltet, die in die eine der ersten und zweiten Stützstangen (91, 92) eingefügt ist und mit dem Knopf (45) verbunden ist, wobei das Kabel (14) mit der Gleitplatte (43) verbunden ist.

13. Eine Verriegelungsvorrichtung (100), dazu angepasst, auf einen zusammenklappbaren Rahmen (900) montiert zu werden, wobei der Rahmen (900) erste und zweite Stützstangen (91, 92) aufweist, die Verriegelungsvorrichtung (100) umfassend
einen ersten Steg (11), der ein erstes Ende (11a) aufweist, das dazu angepasst ist, schwenkbar mit der ersten Stützstange (91) verbunden zu werden und ein zweites Ende (11b), gegenüber dem ersten Ende (11a);
einen zweiten Steg (12), der ein erstes Ende (12a) aufweist, das dazu angepasst ist, schwenkbar mit der zweiten Stützstange (92) verbunden zu werden, und ein zweites Ende (12b), das schwenkbar mit dem zweiten Ende (11b) des ersten Stegs (11) verbunden ist, wobei die ersten und zweiten Stege (11, 12) relativ zueinander beweglich sind, um zusammengeklappt oder auseinandergeklappt zu werden;
**gekennzeichnet durch** eine Hülse (3), die als ein rohrförmiges Element gebildet ist, das gleitfähig auf den ersten Steg (11) gestülpt ist und dazu in der Lage ist, sich hin zu einem Verbindungspunkt der ersten und zweiten Stege (11, 12) zu erstrecken, wenn die ersten und zweiten Stege (11, 12) auseinandergeklappt werden, wobei das rohrförmige Element um einen Abschnitt des zweiten Stegs(12) gestülpt ist, wenn es zu diesem Verbindungspunkt hin bewegt wird, um die Relativbewegung zwischen den ersten und zweiten Stegen (11, 12) zu begrenzen; und
eine Steuereinheit (4), die ein manuell bedienbares Kabel (14) aufweist, das mit der Hülse (3) verbunden ist, um die Hülse (3) weg von dem Verbindungspunkt der ersten und zweiten Stege (11, 12) wegzuziehen, so dass die ersten und zweiten Stege (11, 12) zusammengeklappt werden können.

14. Verriegelungsvorrichtung (100) nach Anspruch 13, **dadurch gekennzeichnet, dass** die Steuereinheit (4) einen manuell bedienten Mechanismus beinhaltet, der auf eine der ersten und zweiten Stützstangen (91, 92) montiert ist und mit dem Kabel (14) verbunden ist.

15. Verriegelungsvorrichtung (100) nach Anspruch 14, **dadurch gekennzeichnet, dass** der manuell bediente Mechanismus einen Knopf (45) beinhaltet, der gleitfähig um eine der ersten und zweiten Stützstangen (91, 92) gestülpt ist und der mit dem Kabel (14) verbunden ist, wobei das Kabel (14) übereinstimmend mit dem Knopf (45) beweglich ist.

16. Verriegelungsvorrichtung (100) nach Anspruch 13, **dadurch gekennzeichnet, dass** die Hülse (3) eine Vorspannungseinheit (35) beinhaltet, die die Hülse (3) so verspannt, dass sie sich zu dem Verbindungspunkt der ersten und zweiten Stege (11, 12) hin bewegt.

17. Verriegelungsvorrichtung (100) nach Anspruch 16, weiterhin **gekennzeichnet durch** eine Rückhalteeinheit, um die Hülse (3) darin zu beschränken, sich zu dem Verbindungspunkt der ersten und zweiten Stege (11, 12) zu bewegen, nachdem die Hülse (3) von dem Verbindungspunkt aus weg gegen die Vorspannungsaktion der Vorspannungseinheit (35) weggezogen wurde.

## Revendications

1. Un châssis pliable (900), comprenant
des premières et secondes barres de support (91, 92) qui sont espacées l'une de l'autre ;
une première traverse (11) qui a une première extrémité (11a) qui est connectée de manière pivotante à la première barre de support (91) et une seconde extrémité (11b) opposée à la première extrémité (11a) ;
une seconde traverse (12) qui a une première extrémité (12a) connectée de manière pivotante à la seconde barre de support (92) et une seconde extrémité (12b) connectée de manière pivotante à la seconde extrémité (11b) de la première traverse (11), la première et la seconde traverse (11, 12) étant connectées de manière pivotante l'une à l'autre, pour être pliées et dépliées ;
**caractérisé par**
une douille (3) formée comme un élément tubulaire qui est disposé autour de la première traverse (11) de manière à pouvoir glisser et qui est déplaçable jusqu'à une jointure des premières et secondes traverses (11, 12), lorsque les premières et secondes traverses (11, 12) sont dépliées, l'élément tubulaire étant disposé autour d'une section de la seconde traverse (12) lorsqu'il est déplacé jusqu'à cette jointure, pour restreindre la seconde traverse (12) à se déplacer relativement à la première traverse (11) ; et
une unité de commande (4), ayant un câble (14) qui est connecté au manchon (3) pour tirer la douille (3) à part de la jointure des premières et secondes traverses (11, 12), de sorte que les premières et secondes traverses (11, 12) peuvent être pliées.

2. Châssis pliable (900), selon la revendication 1, **caractérisé en ce que** la seconde traverse (12) comporte en outre un élément de limitation (16) qui est disposé sur l'extrémité secondaire (12b) de la deuxième traverse (12) et qui peut s'engager avec la seconde extrémité (11b) de la première traverse (11) pour limiter le mouvement relatif entre les premières et secondes traverses (11, 12) lorsque les premières et les secondes traverses (11, 12) sont dépliées.

3. Châssis pliable (900) selon la revendication 2, **caractérisé en ce que** l'élément de limitation (16) a une section transversale sensiblement en forme de U et s'étend depuis la seconde extrémité (12b) de la seconde traverse (12) pour chevaucher l'extrémité secondaire (11b) de la première traverse (11), l'élément de limitation (16) ayant une face de paroi intérieure (164) pouvant s'engager avec la seconde extrémité (11b) de la première traverse (11).

4. Châssis pliable (900) selon la revendication 2, **caractérisé en ce que** l'élément de limitation (16) a un arrêtoir à pedal (168) qui s'étend vers l'extérieur depuis l'élément de limitation (16) et transversalement par rapport à la seconde traverse (12).

5. Châssis pliable (900) selon la revendication 1, **caractérisé en ce que** la douille (3) comporte une unité de précontrainte (35) qui force la douille (3) à se déplacer vers la jointure des premières et secondes traverses (11, 12).

6. Châssis pliable (900) selon la revendication 5, **caractérisé en outre par** une unité de rétention pour restreindre la douille (3) à se déplacer vers la jointure des premières et secondes traverses (11, 12), après avoir tiré la douille (3) loin de la jointure contre l'action de précontrainte de l'unité de précontrainte (35).

7. Châssis pliable (900) selon la revendication 6 **caractérisé en outre par** une paire de joints se croisant (19) qui sont agencés de manière pivotante les uns par rapport aux autres entre les premières et secondes barres de support (91, 92), chaque joint (19) se croisant ayant une extrémité qui est connectée de manière pivotante avec une des premières et secondes traverses (11, 12), l'unité de rétention comportant un élément d'engagement (39) qui s'étend depuis la douille (3), et une pièce de retenue (191) qui s'étend depuis un des joints (19), l'élément d'engagement (39) pouvant s'engager avec la pièce de retenue (191).

8. Châssis pliable (900) selon la revendication 5, **caractérisé en ce que** la douille (3) a une rainure de logement (33) pour loger l'unité de précontrainte, l'unité de précontrainte (35) ayant une extrémité connectée à la douille (3) et une autre extrémité connectée à la première traverse (11).

9. Châssis pliable (900) selon la revendication 1, la douille (3) ayant un support (38) et une grosseur 36) reçu dans le support (38) et connecté au câble (14).

10. Châssis pliable (900) selon la revendication 1, **caractérisé en ce que** l'unité de commande (4) comporte un mécanisme actionné à la main monté sur une des premières et secondes barres de support (91, 92) et connecté au câble (14)

11. Châssis pliable (900) selon la revendication 10, **caractérisé en ce que** le mécanisme actionné à la main comporte un bouton (45) qui est placé de manière à pouvoir glisser autour d'une des premières et secondes barres de support (91, 92) et qui est connecté au câble (14), le câble étant amovible en défilement synchronisé communément avec le bouton (45).

12. Châssis pliable (900) selon la revendication 11, **caractérisé en ce que** le mécanisme actionné à la main comporte en outre une plaque glissante (43) introduite dans une des premières et secondes barres (91, 92) et connectée au bouton (45), le câble (14) étant connecté à la plaque glissante (43).

13. Un dispositif de verrouillage (100), adapté à être monté sur un châssis pliable (900), le châssis (900) ayant des premières et des secondes barres de support (91, 92), le dispositif de verrouillage (100) comprenant :
une première traverse (11) qui a une première extrémité (11a), adaptée à être connectée de façon pivotante avec la première barre de support (91), et une seconde extrémité (11b) opposée à la première extrémité (11a) ;
une seconde traverse (12) ayant une première extrémité (12a), adaptée à être connectée de façon pivotante à la deuxième barre de support (92), et une seconde extrémité (12b) connectée de façon pivotante à la seconde extrémité (11b) de la première traverse (11), les premières et les secondes traverses (11,12) étant amovibles les unes relativement aux autres, pour être pliées ou dépliées ;
**caractérisé par**
une douille (3) formée comme élément tubulaire qui entoure de manière glissante la première traverse (11) et qui est capable de se déplacer jusqu'à une jointure des premières et secondes traverses (11, 12), lorsque les premières et secondes traverses (11, 12) sont dépliées, l'élément tubulaire entourant une section de la seconde traverse (12) lorsqu'il est déplacé jusqu'à cette jointure, pour restreindre le mouvement relatif entre les premières et secondes traverses (11, 12) ; et
une unité de commande (4) qui a un câble (14) opéré manuellement et qui est connecté à la douille (3) pour arracher la douille (3) de la jointure des premières et secondes traverses (11, 12), de sorte que les premières et secondes traverses (11, 12) peuvent être pliées.

14. Dispositif de verrouillage (100) selon la revendication 13, **caractérisé en ce que** l'unité de commande (4) comporte un mécanisme opéré manuellement et monté sur une des premières et secondes barres de support (91, 92) et connecté au câble (14).

15. Dispositif de verrouillage (100) selon la revendication 14, **caractérisé en ce que** le mécanisme opéré manuellement comporte un bouton (45) qui entoure de manière glissante une des premières et secondes barres de support (91, 92) et qui est connecté au câble (14), le câble (14) étant amovible en défilement synchronisé communément avec le bouton (45).

16. Dispositif de verrouillage (100) selon la revendication 13 ; **caractérisé en ce que** la douille (3) comporte une unité de précontrainte (35) qui force la douille (3) à se déplacer vers la jointure des premières et secondes traverses (11, 12).

17. Dispositif de verrouillage (100) selon la revendication 16, **caractérisé en outre par** une unité de rétention pour restreindre la douille (3) à se déplacer vers la jointure des premières et secondes traverses (11, 12) après l'avoir tiré loin de la jointure contre l'action de précontrainte de l'unité de précontrainte (35).
